# EUROPÄISCHE PATENTSCHRIFT

(11) **EP 0 791 225 B1**
(45) Veröffentlichungstag und Bekanntmachung des Hinweises auf die Patenterteilung: **16.09.1998**
(21) Anmeldenummer: 95936966.1
(22) Anmeldetag: 15.11.1995
(51) Int. Cl.: H01H 85/20, H02B 1/28

(54) **SICHERUNGSKAMMERVERSCHLUSS IM SICHERUNGSANBAU**
FUSE BOX CLOSURE IN A FUSE ASSEMBLY
FERMETURE DE BOITE A FUSIBLES POUR SYSTEME DE COUPE-CIRCUIT A FUSIBLES

(30) Priorität: 18.11.1994 DE 4442363
(43) Veröffentlichungstag der Anmeldung: 27.08.1997
(73) Patentinhaber: SIEMENS AKTIENGESELLSCHAFT, 80333 München (DE)
(72) Erfinder: HARBECKE, Günter-Gustav, D-63526 Erlensee (DE); SPÄCK, Helmut, D-63739 Aschaffenburg (DE); SCHWEPPE, Friedrich, D-64859 Eppertshausen (DE)
(86) Internationale Anmeldenummer: DE9501647
(87) Internationale Veröffentlichungsnummer: WO9616425

(56) Entgegenhaltungen:
- EP-A- 0 436 255
- DE-A- 4 116 058
- US-A- 4 260 863
- US-A- 4 620 061

## Beschreibung

Die Erfindung betrifft einen Sicherungskammerverschluß im Sicherungsanbau von Lasttrennschalter-Anlagen mit einem die Sicherungskammer lösbar verschließenden Sicherungsdeckel, wobei ein Sicherungsträgerteil zur Aufnahme des Kontaktbolzens einer Schmelzsicherung lösbar mit dem Sicherungsdeckel verbunden ist.

Ein Sicherungskammerverschluß der eingangs definierten Art ist aus der DE-OS 41 16 058 bekannt. Die Sicherungskammer, die mit dem Sicherungsdeckel verschließbar ist, weist dabei einen konisch geformten umlaufenden Ringabschnitt auf, der im Verschließzustand von einer V-förmigen Ringnut innerhalb des Sicherungsdeckels umschlossen ist. Zwischen der inneren Anlagefläche des umlaufenden Ringabschnitts der Sicherungskammer und der V-förmigen Ringnutflächen des Sicherungsdeckels liegt eine Dichtung, die sowohl eine Fluidabdichtung als auch eine elektrische Abdichtung zwischen dem inneren und äußeren Bereich der Sicherungskammer durch den Sicherungsdeckel bewirkt. Der Sicherungsdeckel selbst ist durch Befestigungsschrauben mit der Sicherungskammer lösbar verbunden. Die der Erfindung zugrundeliegende Aufgabe besteht darin, den Sicherungskammerverschluß konstruktiv wesentlich zu vereinfachen und insbesondere die Dichtung im elektrischen Bereich zu verbessern. Erfindungsgemäß wird dies durch die folgenden Merkmale erreicht:
1.1. die Sicherungskammer enthält im Bereich der dem Sicherungsdeckel zugewandten Seite eine Zylinderringnut,
1.2. der Sicherungsdeckel enthält im Bereich der der Sicherungskammer zugewandten Seite eine profilerweiternde Zylinderringkontur,
1.3. die Zylinderringkontur ist derart gestaltet, daß im Verschließzustand nur die Längsseiten der Zylinderringnut der Sicherungskammer die Zylinderringkontur des Sicherungsdeckels formschlüssig umgeben.

Mit einem derartig ausgebildeten Sicherungskammerverschluß, bei der die Längsseite der zylindrischen Konturen der Zylinderringnut der Sicherungskammer und die des Sicherungsdeckels sich formschlüssig umgeben, stellt die elektrische Dichtung für die zu verhindernden Ströme praktisch eine Barriere dar, die gegenüber der sogenannten elektrischen Edelfuge eine sehr viel weitergehende Sperrwirkung entfaltet. Das Dichtelement beschränkt sich bei diesem Sicherungskammerverschluß im wesentlichen auf die Abdeckung der plan zueinander gerichteten Bereiche der Sicherungskammer und des Sicherungsdeckels. Eine Abdichtung von konisch umlaufenden Ringabschnitten ist dabei nicht erforderlich. Da lediglich die Längsseiten der Zylinderringnut der Sicherungskammer mit der Zylinderringkontur des Sicherungsdeckels formschlüssig umschlossen sind, ist ein Verkanten bzw. undichtes Aufsetzen des Sicherungsdeckels auf die Sicherungskammer verhindert. Die Endbereiche der Zylinderringkontur und der Zylinderringnut sind also im Verschließzustand nicht aneinander stoßend.

Eine vorteilhafte Ausgestaltung der Erfindung sieht folgende Merkmale vor:
2.1. die Sicherungskammer ist mit dem Sicherungsdeckel durch eine im Sicherungsdeckel integrierte Griffhebelmechanik verschließbar, die sicherungsauslösende Schaltmittel enthält,
2.2. die Griffhebelmechanik bewirkt im Verschließzustand der Sicherungskammer ein Angreifen einer Befestigungshebelkontur der Griffhebelmechanik an eine ringförmige Profilerweiterung der Sicherungskammer.
Mit der im Sicherungsdeckel integrierten Griffhebelmechanik, die im Verschließzustand mit seiner Befestigungshebelkontur an die ringförmige Profilerweiterung der Sicherungskammer angreift, ist ein Verschluß ohne Befestigungsschrauben realisiert. Die Entnahme der Schmelzsicherung erfolgt in einfacher Weise ohne manuell zu lösende Befestigungsschrauben lediglich durch das Verschwenken der im Sicherungsdeckel integrierten Griffhebelmechanik.

Die Erfindung wird durch ein figürlich dargestelltes Ausführungsbeispiel näher erläutert, in dem in einer Schnittbild-darstellung lediglich die für die Erfindung wesentlichen Teile dargestellt sind.

Das Ausführungsbeispiel zeigt die Sicherungskammer SK im Schnittbild, die durch den Sicherungsdeckel SD verschlossen werden kann. Die Sicherungskammer SK weist die Zylinderringnut ZN auf, in der die Zylinderringkontur ZR des Sicherungsdeckels SD, in dem die Griffhebelmechanik GM integriert ist, im Verschließzustand eingreift. Desweiteren ist erkennbar, daß an dem Sicherungsdeckel SD der Sicherungsträger ST mit einer nicht bezeichneten Befestigungsschraube lösbar verbunden ist. Der Sicherungsträger ST ist außerdem mit dem Klemmkontakt KK verbunden, in dem der Kontaktbolzen KB der Schmelzsicherung SS eingreift. Die elektrische Verbindung zum nicht dargestellten Anschlußkontakt wird durch den Klemmkontakt KK über den Kontaktleiter KL hergestellt.
Desweiteren ist ersichtlich, daß der Sicherungsdeckel SD in dem der Sicherungskammer SK zugewandten Bereich das Dichtungselement DE vorsieht, das im Verschließzustand der Sicherungskammer SK mit dem Sicherungsdeckel SD den Innenraum der Sicherungskammer SK gegenüber dem Außenbereich dichtend verschließt.
Die Griffhebelmechanik GM, die integraler Bestandteil des Sicherungsdeckels SD ist, ist mit der Befestigungshebelkontur BK versehen, die im Verschließzustand hinter die Profilerweiterung PE der Sicherungskammer SK eingreift. Mit den ineinandergreifenden zylindrischen Konturen des Sicherungsdeckels SD und der Sicherungskammer SK ist eine stromdichte Barriere zwischen dem Innenbereich der Sicherungskammer SK und dem äußeren Bereich erreicht.

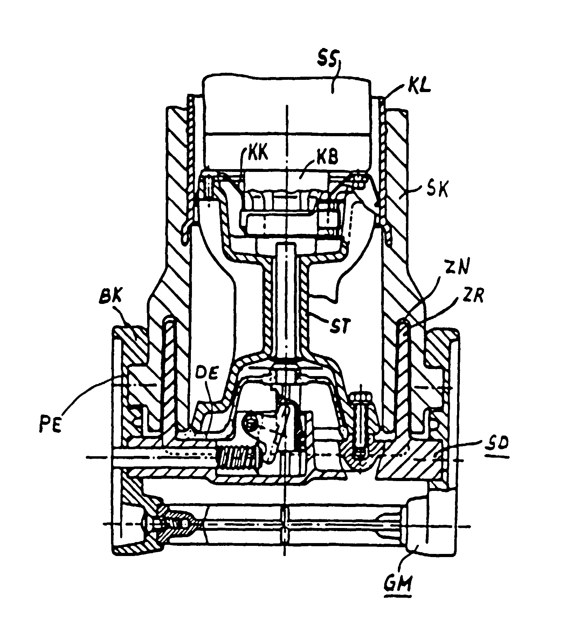

## Patentansprüche

1. Sicherungskammerverschluß im Sicherungsanbau von Lasttrennschalter-Anlagen mit einem die Sicherungskammer lösbar verschließenden Sicherungsdeckel, wobei ein Sicherungsträgerteil zur Aufnahme des Kontaktbolzens einer Schmelzsicherung lösbar mit dem Sicherungsdeckel verbunden ist,
**gekennzeichnet durch** die Merkmale
1.1. die Sicherungskammer (SK) enthält im Bereich der dem Sicherungsdeckel (SD) zugewandten Seite eine Zylinderringnut (ZN),
1.2. der Sicherungsdeckel (SD) enthält im Bereich der der Sicherungskammer (SK) zugewandten Seite eine profilerweiternde Zylinderringkontur (ZR),
1.3. die Zylinderringkontur (ZR) ist derart gestaltet, daß im Verschließzustand nur die Längsseiten der Zylinderringnut (ZN) der Sicherungskammer (SK) die Zylinderringkontur (ZR) des Sicherungsdeckels (SD) formschlüssig umgeben.

2. Sicherungskammerverschluß nach Anspruch 1,
**gekennzeichnet durch** die Merkmale
2.1. die Sicherungskammer (SK) ist mit dem Sicherungsdeckel (SD) durch eine im Sicherungsdeckel (SD) integrierte Griffhebelmechanik (GM) verschließbar, die sicherungsauslösende Schaltmittel enthält,
2.2. die Griffhebelmechanik (GM) bewirkt im Verschließzustand der Sicherungskammer (SK) ein Angreifen einer Befestigungshebelkontur (BK) der Griffhebelmechanik (GM) an eine ringförmige Profilerweiterung (PE) der Sicherungskammer (SK).

## Claims

1. Fuse box closure in the fuse assembly of switch disconnector systems having a fuse cover which detachably closes the fuse box, with a fuse carrier part for accommodating the contact stud of a fusible link being detachably connected to the fuse cover,
characterized by the features:
1.1. in the region of the side facing the fuse cover (SD) the fuse box (SK) contains a cylindrical ring groove (ZN),
1.2. in the region of the side facing the fuse box (SK) the fuse cover (SD) contains a profile-extending cylindrical ring contour (ZR),
1.3. the cylindrical ring contour (ZR) is formed in such a way that in the closed state only the longitudinal sides of the cylindrical ring groove (ZN) of the fuse box (SK) surround the cylindrical ring contour (ZR) of the fuse cover (SD) in a form-locking manner.

2. Fuse box closure according to claim 1,
characterized by the features:
2.1. the fuse box (SK) is closable by the fuse cover (SD) by way of a grip-type lever mechanism (GM) integrated into the fuse cover (SD), the mechanism containing fuse-tripping switching means,
2.2. the grip-type lever mechanism (GM) in the closed state of the fuse box (SK) effects an engagement of a fastening lever contour (BK) of the grip-type lever mechanism (GM) with a ring-shaped profile extension (PE) of the fuse box (SK).

## Revendications

1. Fermeture de boîte à fusibles dans le système de sécurité d'installations de sectionneur à coupure en charge. comportant un couvercle de fusible fermant la boîte à fusibles avec possibilité d'ouverture, une partie formant support de fusibles pour la réception d'un axe de contact d'un fusible étant reliée de manière amovible au couvercle de fusible, caractérisé par les caractéristiques :
1.1 le boîtier (SK) à fusibles comporte, dans la région du côté tourné vers le couvercle (SD) de fusible, une rainure (ZN) annulaire cylindrique,
1.2 le couvercle (SD) de fusibles comporte, dans la région du côté tourné vers le boîtier (SK) à fusibles, un contour (ZR) annulaire cylindrique d'élargissement du profil,
1.3 le contour (ZR) annulaire cylirdrique est formé de sorte que, à l'état fermé seuls les côtés longitudinaux de la rainure (ZN) annulaire cylindrique du boîtier (ZK) à fusibles entourent le contour (ZR) annulaire cylindrique du couvercle (SD) de fusibles par complémentarité de forme.

2. Fermeture de boîte à fusibles selon la revendication 1, caractérisé par les caractéristiques :
2.1. le boîtier (SK) à fusibles peut-être fermé, avec le couvercle (SD) de fusibles, par un mécanisme (GM) à levier de préhension intégré au couvercle (SD) de fusible, ce mécanisme comprenant des moyens de commutation de déclenchement de fusible
2.2. le mécanisme (GM) à levier de préhension provoquant à l'état de fermeture du boîtier (SK) à fusibles une attaque d'un contour (BK) de levier de fixation du mécanisme (GM) à levier de préhension sur un élargissement (PE) de profil annulaire du boîtier (SK) à fusibles.
